(19) Europäisches Patentamt

European Patent Office

Office européen des brevets

(11) **EP 1 341 722 B1**

(12) **EUROPÄISCHE PATENTSCHRIFT**

(45) Veröffentlichungstag und Bekanntmachung des Hinweises auf die Patenterteilung:
**19.05.2004   Patentblatt 2004/21**

(21) Anmeldenummer: **01270489.6**

(22) Anmeldetag: **21.11.2001**

(51) Int Cl.$^7$: **C01B 33/107**, C01B 33/04, C01B 33/027

(86) Internationale Anmeldenummer:
**PCT/EP2001/013496**

(87) Internationale Veröffentlichungsnummer:
**WO 2002/048024 (20.06.2002 Gazette 2002/25)**

(54) **VERFAHREN ZUR HERSTELLUNG VON TRICHLORSILAN**

METHOD FOR PRODUCING TRICHLOROSILANE

PROCEDE DE FABRICATION DE TRICHLOROSILANE

(84) Benannte Vertragsstaaten:
**AT BE CH CY DE DK ES FI FR GB GR IE IT LI LU MC NL PT SE TR**

(30) Priorität: **14.12.2000   DE 10062413**

(43) Veröffentlichungstag der Anmeldung:
**10.09.2003   Patentblatt 2003/37**

(73) Patentinhaber: **SOLARWORLD AKTIENGESELLSCHAFT**
**53113 Bonn (DE)**

(72) Erfinder:
• **MLECZKO, Leslaw**
  **44801 Bochum (DE)**
• **BUCHHOLZ, Sigurd**
  **50825 Köln (DE)**
• **SILL, Torsten**
  **58332 Schwelm (DE)**

• **BECKER, Frank**
  **41539 Dormagen (DE)**

(74) Vertreter: **Rau, Albrecht et al**
**Rau, Schneck & Hübner**
**Königstrasse 2**
**90402 Nürnberg (DE)**

(56) Entgegenhaltungen:
**EP-A- 0 133 209          DE-A- 3 024 319**

• **DATABASE CHEMABS [Online] CHEMICAL ABSTRACTS SERVICE, COLUMBUS, OHIO, US; OSAKA TITANIUM CO., LTD., JAPAN: "Trichlorosilane" retrieved from STN Database accession no. 95:171974 CA XP002195667 & JP 56 073617 A (OSAKA TITANIUM CO., LTD., JAPAN) 18. Juni 1981 (1981-06-18)**

**Beschreibung**

Die vorliegende Erfindung betrifft ein Verfahren zur Herstellung von Trichlorsilan.

Trichlorsilan $HSiCl_3$ ist ein wertvolles Zwischenprodukt zur Herstellung von Reinst-Silicium, von Dichlorsilan $H_2SiCl_2$, von Silan $SiH_4$ und von Haflvermittlern. Zu seiner Herstellung werden technisch verschiedene Verfahrenswege genutzt.

Aus EP 658 359 A2 und DE 196 54 154 A1 ist die Hydrierung von Siliciumtetrachlorid mit Wasserstoff entweder bei hoher Temperatur oder in Gegenwart von Katalysatoren bekannt.

In US-A-4,676,967 ist die Herstellung von Trichlorsilan durch Umsetzung von Silicium mit Chlorwasserstoff in einem Wirbelbett bei einer Temperatur von ca. 300°C erwähnt. Es wird eine Mischung erhalten, die neben Trichlorsilan auch große Mengen an Siliciumtetrachlorid und weiterhin Dichlorsilan, Metallhalide und Polysilane enthält. Zur Durchführung des Verfahrens werden vergleichsweise große Reaktoren benötigt. Darüber hinaus ist die Entsorgung der Nebenprodukte, insbesondere der Polysilane aufwendig.

Die Umsetzung von Silicium mit Siliciumtetrachlorid und Wasserstoff zu Trichlorsilan im Temperaturbereich von 400°C bis 600°C ist aus US-A-4,676,967 und CA-A-1,162,028 bekannt. Dieser Verfahrensweg hat besondere Bedeutung in den Fällen erlangt, in denen die Weiterverarbeitung des Trichlorsilans zwangsläufig zu einer Erzeugung von Siliciumtetrachlorid führt, weil dann der Zwangsanfall an Siliciumtetrachlorid direkt nutzbringend in Trichlorsilan rückumgewandelt werden kann. Das ist beispielsweise der Fall bei der Herstellung von Dichlorsilan und von Silan durch Disproportionierung von Trichlorsilan.

Dieses Verfahren kann als Teilschritt in verschiedene umfassendere kontinuierliche Prozesse integriert werden, z.B. in Prozesse zur Silan- oder Reinst-Silicium-Erzeugung.

Beispielsweise werden in US-A-4,676,967 und CA-A-1,162,028 Verfahren zur Herstellung hochreinen Silans und von Reinst-Silicium offenbart, wobei in einem ersten Schritt die Umsetzung von metallurgischem Silicium mit Wasserstoff und Siliciumtetrachlorid zu Trichlorsilan erfolgt. Die Reaktion wird bei Temperaturen von etwa 400 bis 600°C und unter erhöhtem Druck größer 100 psi (6,89 bar) durchgeführt. Die Umsetzung unter erhöhtem Druck ist notwendig, um die Ausbeute an Trichlorsilan zu erhöhen. Im nachfolgenden Schritt erfolgt die Disproportionierung von Trichlorsilan zu Silan. Dabei entsteht zwangsläufig Siliciumtetrachlorid, das rezykliert und erneut der Umsetzung mit Wasserstoff und metallurgischem Silicium zugeführt wird. Das hergestellte Silan kann schließlich thermisch zu Reinst-Silicium und Wasserstoff zersetzt werden.

Es hat zahlreiche Versuche gegeben, die Herstellung von Trichlorsilan aus Silicium, Siliciumtetrachlorid und Wasserstoff effizienter zu gestalten. So wurde bereits in US-A-4,676,967 und CA-A-1,162,028 vorgeschlagen, ein Katalysatorsystem zuzusetzen.

Aufgrund der niedrigeren Kosten und seiner höheren Aktivität im Vergleich zu reinem Silicium wird als Rohstoff bei den oben beschriebenen Verfahrenswegen meist ein Silicium von metallurgischer Qualität, das verschiedene weitere metallische Elemente als Verunreinigungen (bis in den Prozentbereich) enthält, genutzt. Diese Verunreinigungen werden während der Aufreinigung der Chlorsilanprodukte aufgearbeitet und meist in Form der Chloride auf chemischem oder physikalischem Weg abgetrennt. Der so entstehende Chlorverlust muss daher ersetzt werden. Zum Ersetzen dieses Verlustes an Chlor in Kreislaufprozessen bietet sich die Verwendung von Chlorwasserstoff an. Letzterer setzt sich in einer exothermen Reaktion mit Silicium unter Bildung der Produkte Tirchlorsilan, Siliciumtetrachlorid und Wasserstoff um.

Aus DE 33 03 903 A1 ist ein Verfahren zur Herstellung von Trichlorsilan aus Silicium, insbesondere aus Restsilicium enthaltenden Kontaktmassen bekannt, wobei man das Silicium mit einer wasserfreien Chlorquelle, wie Chlorwasserstoffgas und/oder Chlorgas in Gegenwart von Siliciumtetrachlorid bei einer erhöhten Temperatur in Kontakt bringt. Die Zugabe von Wasserstoff ist nicht vorgesehen. Bevorzugt wird Chlorwasserstoffgas und/oder Chlorgas in einer Menge von 10 bis 99 Mol-%, insbesondere bevorzugt von etwa 28 bis 44 Mol-% zugesetzt.

Es ist auch bekannt (Ingle und Peffley, J. Electrochem. Soc., 1985, 1236-1240), Silicium unterschiedlicher Qualität in An- oder Abwesenheit eines Katalysators mit Siliciumtetrachlorid, Wasserstoff und Chlorwasserstoff umzusetzen. Die Zugabe von Chlorwasserstoff erfolgt hierbei jedoch meist mit einem deutlichen Überangebot gegenüber dem Siliciumtetrachlorid, so dass Siliciumtetrachlorid, das bei einer nachfolgenden weiteren Umsetzung von Trichlorsilan, beispielsweise zu Silan oder Reinst-Silicium als Zwangsanfall gebildet wird, nicht nutzbringend in Trichlorsilan rückumgewandelt werden kann. Grund dafür ist, dass in solchen Prozessen die im System vorhandene Menge Chlor, worunter gebundenes Chlor, beispielsweise in Form von Siliciumtetrachlorid, Trichlorsilan, Dichlorsilan und Chlorwasserstoff verstanden wird, nicht abnimmt. Die hohe Chlor-Zufuhr über die Zugabe von Chlorwasserstoff führt zu einer stöchiometrischen Zunahme des im System befindlichen Siliciumtetrachlorids. Die Chlorbilanz kann nur über die unerwünschte Entnahme chlorhaltiger Spezies, etwa Siliciumtetrachlorid ausgeglichen werden.

Aus US-A-4,526,769 ist die Herstellung von Trichlorsilan aus Silicium, Siliciumtetrachlorid, Wasserstoff und Chlorwasserstoff in einem Zweistufen-Prozess bekannt. In der ersten Stufe erfolgt bei hohen Temperaturen von 550-700°C die Umsetzung gemäß:

$$3\ SiCl_4 + 2\ H_2 + Si \rightleftarrows 4\ SiHCl_3$$

In einer zweiten Stufe wird dann zu dem in der ersten Stufe entstehenden Gemisch Chlorwasserstoff eingespeist und bei 230-400°C die Reaktion durchgeführt, wobei folgende Umsetzung erfolgt:

$$HCl + Si \rightarrow HSiCl_3 + SiCl_4 + H_2$$

Die Selektivität zu den Produkten Siliciumtetrachlorid und Trichlorsilan hängt bei dieser Reaktion stark von der Reaktionstemperatur während der beiden Stufen ab. Mit steigender Reaktionstemperatur wird überwiegend $SiCl_4$ gebildet. Die Durchführung dieses Zweistufen-Prozesses kann in einem Reaktor erfolgen, wobei die erste Stufe bei T = 500°-700°C, vorzugsweise bei T = 550°-650°C und die zweite Stufe bei 300-350°C, vorzugsweise bei 325 ± 15°C durchgeführt wird. Die Temperatur muss also, insbesondere in der 2. Stufe in einem vergleichsweise kleinen Toleranzbereich konstant gehalten werden. Beide Stufen sind mit Edukt-Silicium beschickt, die unterschiedlichen Temperaturen, die durch ein Wännetauschersystem erzielt werden, dienen dazu, eine geeignete Produkverteilung zu erhalten. Nachteile der oben beschriebenen Verfahrcnsführung sind die aufwendige Konstruktion der zwei Stufen und der komplizierte Aufwand für Regelung und Reaktionsführung, insbesondere für die Einhaltung der notwendigen Temperaturen.
Es ist also kein kontinuierlich betreibbares, einfaches und apparativ einstufiges Verfahren zur Herstellung von Trichlorsilan aus Silicium, Siliciumtetrachlorid, Wasserstoff und Chlorwasserstoff bekannt, in dem hohe Ausbeuten erzielt werden und überdies die Chlorwasserstoff-Zugabe nicht zu einer vermehrten Bildung von Siliciumtetrachlorid ($SiCl_4$) anstelle von Trichlorsilan ($SiHCl_3$) führt. Der vorliegenden Erfindung lag die Aufgabe zugrunde, ein derartiges vorteilhaftes Verfahren zu schaffen.
Gegenstand der Erfindung ist ein Verfahren zur Herstellung von Trichlorsilan durch Umsetzung von Silicium mit Siliciumtetrachlorid und Wasserstoff unter Zugabe von Chlorwasserstoff, dadurch gekennzeichnet, dass die Verweilzeit des Chlorwasserstoffs im Reaktionsraum $10^{-3}$ bis 50 % der Verweilzeit des Siliciumtetrachlorids beträgt.
Unter der Verweilzeit einer Komponente wird dabei der Quotient aus Reaktorvolumen und dem Volumenstrom der entsprechenden Komponente (Chlorwasserstoff bzw. Siliciumtetrachlorid) verstanden.
Bisher wurde nur die unerwünschte Verringerung der möglichen Trichlorsilanausbeute durch Einspeisen von Chlorwasserstoff zusammen mit den anderen Edukten Siliciumtetrachlorid und Wasserstoff beschrieben. Überraschenderweise wird dies bei Zusatz von Chlorwasserstoff im erfindungsgemäßen Verfahren nicht beobachtet.
Im Gegenteil führt die Zugabe von Chlorwasserstoff zu der Reaktionsmischung aus Silicium, Siliciumtetrachlorid und Wasserstoff im erfindungsgemäßen Verfahren, wobei die Verweilzeit des Chlorwasserstoffs im Reaktions-raum $10^{-3}$ bis 50 % der Verweilzeit des Siliciumtetrachlorids beträgt, zu einer unerwartet deutlichen Erhöhung des Anteils an Trichlorsilan im Produktgas, die letztlich dazu führt, dass einstufig und selbst ohne Zusatz von Katalysatoren hohe Ausbeuten an Trichlorsilan, das heißt hohe Umsetzungsgrade des eingeführten Siliciumtetrachlorids und des Chlorwasserstoffs, und gleichzeitig hohe Gesamtausbeuten, d.h. weitgehende Verwertung des eingesetzten Siliciums, erreicht werden, wobei die Menge an im Kreis zu führendem Siliciumtetrachlorid erniedrigt wird. Erst bei längeren Verweilzeiten des Chlorwasserstoffs und/oder höheren Temperaturen wird Siliciumtetrachlorid gebildet. Aus diesem Grund gelingt es, durch die erfindungsgemäß einzuhaltende kurze Verweilzeit des Chlowasserstoff-haltigen Gases eine deutliche Ausbeute-Steigerung an Trichlorsilan zu erzielen.
Unter Reaktionsraum wird der Bereich des Reaktors verstanden, in dem Silicium vorliegt und dessen Umsetzung mit den Edukten Siliciumtetrachlorid und Wasserstoff erfolgt.
Vorzugsweise beträgt die Verweilzeit des Chlorwasserstoffs im Reaktionsraum $10^{-3}$ bis 20 % der Verweilzeit des Siliciumtetrachlorids, besonders bevorzugt $10^{-3}$ bis 5 %.
Chlorwasserstoff wird vorzugsweise in wasserfreier Form als Chlorwasserstoffgas eingesetzt, wobei es ebenfalls möglich ist, eine Mischung aus Chlorwasserstoffgas und einem inerten Gas, beispielsweise Argon, einzusetzen.
Beispielsweise werden 0,05 - 20 Gew.-%, vorzugsweise 0,1 -10 Gew.-% Chlorwasserstoff, bezogen auf die Masse des zugeführten Siliciumtetrachlorids eingesetzt.
Die erfindungsgemäße Verweilzeit des Chlorwasserstoffs im Reaktionsraum kann beispielsweise dadurch eingestellt werden, dass Siliciumtetrachlorid und Wasserstoff über einen Gasverteiler von unten in den Reaktionsraum eingespeist werden, während die Einspeisung von Chlorwasserstoff über eine zweite Gaszufuhrvorrichtung erfolgt, die sich im oberen Teil des Reaktionsraumes oder des Reaktors befindet.
Vorzugsweise erfolgt die Einspeisung von Chlorwasserstoff über eine zweite Gaszufuhrvorrichtung im oberen Drittel des Reaktionsraumes.
Es ist aber auch möglich, die erfindungsgemäße Verweilzeit des Chlorwasserstoffs im Reaktionsraum durch ein Einspeisen des Chlorwasserstoffs mit hoher Gasgeschwindigkeit durch Düsen (Jets) an der Wand, oder an einer Position innerhalb des oberen Teil des Reaktors einzustellen.

Eine weitere Möglichkeit die Verweilzeit einzustellen, besteht darin, die Zugabe von Chlorwasserstoff an Positionen im Reaktor durchzuführen, an denen die Gasgeschwindigkeit sehr hoch ist. Dies ist z.B. der Fall in einem feststoff-abtrennenden Zyklon oder Feststoff-Abscheider, der sich hinter bzw. über dem Reaktor befindet oder in einem Bereich der Rückführung des im Zyklon oder Feststoffabscheiders abgetrennten Materials. Beispielsweise kann die Verweilzeit des Chlorwasserstoffs durch dessen Zugabe an einer Stelle, an der das aus dem Wirbelbett ausgetragene Material aus dem Gasstrom abgetrennt wird (Zyklon oder Feststoff-Abscheidung) eingestellt werden.

Das erfindungsgemäße Verfahren wird beispielsweise bei Drucken von 1 bis 150 bar, vorzugsweise 10 bis 60 bar, besonders bevorzugt 25 bis 40 bar durchgeführt.

Beispielsweise wird bei Temperaturen von 350 bis 800°C, bevorzugt von 400 bis 700°C, insbesondere bevorzugt von 500 bis 650°C gearbeitet.

Die Wahl des Reaktors, in dem die erfindungsgemäße Umsetzung erfolgen soll, ist nicht kritisch, solange der Reaktor unter den Reaktionsbedingungen hinreichende Stabilität aufweist und den Kontakt der Ausgangsstoffe erlaubt. Beispielsweise kann in einem Festbettreaktor, einem Drehrohrofen oder einem Wirbelbettreaktor gearbeitet werden. Die Reaktionsführung in einem Wirbelbettreaktor ist bevorzugt.

Besonders bevorzugt erfolgt die Umsetzung von Silicium mit Siliciumtetrachlorid, Wasserstoff und Chlorwasserstoff in einem Reaktor, in dem die Silcium-Partikeln so vom zugeführten Gas durchströmt werden, dass die Partikel fluidisiert werden und sich ein Wirbelbett ausbildet. Die Einströmgeschwindigkeit des zugeführten Gases muss mindestens der Lockerungsgeschwindigkeit entsprechen. Unter Lockerungsgeschwindigkeit wird dabei die Geschwindigkeit verstanden, mit der ein Gas durch ein Bett aus Partikeln strömt und unterhalb derer das Festbett erhalten bleibt, d.h. unterhalb derer die Bettpartikel weitgehend unbewegt bleiben. Oberhalb dieser Geschwindigkeit beginnt die Fluidisierung des Betts, d.h. die Bettpartikel bewegen sich und es bilden sich erste Blasen.

Die Einströmgeschwindigkeit des zugeführten Gases beträgt bei dieser bevorzugten Ausführungsform die ein- bis zehnfache, bevorzugt die eineinhalb- bis fünffache Lockerungsgeschwindigkeit.

Prinzipiell ist es möglich, bei der Durchführung des erfindungsgemäßen Verfahrens einen Katalysator zuzugeben. Geeignete Katalysatoren sind beispielsweise Kupfer, Kupferoxid, Kupfermischoxid, Eisen, Eisen(II)chlorid, Eisenoxide, Nickel, Nickelchlorid, Nickeloxid. Durch die erfindungsgemäße Reaktionsführung ist eine Katalysatorzugabe jedoch nicht notwendig.

Wird Katalysator zugegeben, so beträgt die Menge an eingesetztem Katalysator beispielweise 0,1 bis 20 Gew.-%, vorzugsweise 0,3 bis 7,5 Gew.-%, bezogen auf die Menge an Silicium.

Im erfindungsgemäßen Verfahren kann beliebiges Silicium eingesetzt werden. Bevorzugt wird jedoch metallurgisches Silicium oder Ferrosilicium eingesetzt. Unter metallurgischem Silicium wird dabei Silicium verstanden, das bis etwa 3 Gew.-% Eisen, 0,75 Gew.-% Aluminium, 0,5 Gew.-% Calcium und weitere Verunreinigungen enthalten kann, wie sie üblicherweise in Silicium zu finden sind, das durch carbothemüsche Reduktion von Silicium gewonnen wurde.

Besonders bevorzugt wird Silicium mit einem Gesamtgehalt an Nebenbestandteilen und Verunreinigungen von bis zu 20 Gew.-% eingesetzt.

Insbesondere bevorzugt wird Silicium in Form von weitgehend sphärischen Siliciumpartikeln eingesetzt.

Die Anforderungen an die Reinheit der Edukte Chlorwasserstoff, Siliciumtetrachlorid und Wasserstoff hängen davon ab, welche Reinheit das erzeugte Trichlorsilan aufweisen soll.

Bevorzugt wird nach dem erfindungsgemäßen Verfahren hochreines Trichlorsilan hergestellt. In diesem Fall weisen auch die Edukte eine möglichst hohe Reinheit auf.

Wasserstoff und Siliciumtetrachlorid können beispielsweise in einem Molverhältnis von 0,6:1 bis 5:1, bevorzugt 0,6:1 bis 4:1, insbesondere bevorzugt 0,6:1 bis 3:1 eingesetzt werden.

Das nach dem erfindungsgemäßen Verfahren hergestellte Trichlorsilan kann beispielsweise zur Herstellung von Silan und/oder Reinst-Silicium verwendet werden.

Bevorzugt wird das erfindungsgemäße Verfahren in ein Gesamtverfahren zur Herstellung von Reinst-Silicium integriert.

Das erfindungsgemäße Verfahren wird anhand der folgenden Beispiele näher erläutert, wobei die Beispiele jedoch nicht als Einschränkung des Erfindungsgedankens zu verstehen sind.

**Beispiele**

**Beispiel 1**

**(Umsetzung von Silicium mit Chlorwasserstoff ohne Zugabe von H$_2$/SiCl$_4$)**

In einem Wirbelschichtreaktor mit einem Innendurchmesser I.D.= 0,05 m wurden 400 g metallurgisches Silicium (99,3 Gew.-% Silicium, mittlerer Teichendurchmesser Dp = 250-315 μm) vorgelegt. Das Silicium wurde bei einer Temperatur T = 510°C bzw. 603°C mit Chlorwasserstoff bei einem Gesamtdruck von $p_{ges}$= 1,1 bar zur Umsetzung gebracht. Die Eduktgaszusammensetzung betrug 96 Vol.-% N$_2$ zu 4 Vol.-% Chlorwasserstoff. Die Zugabe der Eduktgaszusammensetzung erfolgte *a)* über einen Gasverteiler im Reaktorboden und *b)* über einen zweiten Gasverteiler 1 cm unter der expandierten Höhe des Wirbelbettes. Bei Zugabe der Eduktgaszusammensetzung über einen Gasverteiler im Reaktorboden (Fall a) beträgt die Selektivität zu Trichlorsilan 9 % bei Reaktionsführung bei T = 603°C bzw. 31 % bei Reaktionsführung bei T = 510°C. Die Zugabe der Eduktgaszusammensetzung im oberen Teil (Fall b) führt dazu, dass sich die Selektivität zu Trichlorsilan auf 51 % bei Reaktionsführung bei T = 603°C bzw. auf 82 % bei Reaktionsführung bei T = 510°C erhöht, was einer Erhöhung von 42-51 % entspricht. Der Umsatz ging dabei nur leicht von 88 auf 84 % (T = 603°C) bzw. 80 auf 70 % (T = 510°C) zurück.

Beispiel 1 zeigt, dass die Selektivität für Trichlorsilan bei der Umsetzung von Silicium mit Chlorwasserstoff mit abnehmender Verweilzeit von Chlorwasserstoff im Reaktionsraum deutlich ansteigt.

### Beispiel 2

In einem Wirbelbettreaktor mit einem Innendurchmesser I.D.= 0,05 m wurden 400 g metallurgisches Silicium (99,3 Gew.-% Silicium, mittlerer Teichendurchmesser Dp = 250-315 μm) vorgelegt und bei einer Temperatur T = 510°C und einem Gesamtdruck von p$_{ges}$= 1,1 bar mit Siliciumtetrachlorid, Wasserstoff und Chlorwasserstoff umgesetzt. Das Molverhältnis H$_2$/SiCl$_4$ betrug 2 bei Anwesenheit von 20 Vol.-% N$_2$ und Zusatz von 4 Vol.-% Chlorwasserstoff. Die Zugabe der H$_2$/SiCl$_4$-Mischung erfolgte über einen Gasverteiler im Reaktorboden. Die Zugabe des Chlorwasserstoffs erfolgte *a)* ebenfalls über den Gasverteiler im Reaktorboden und *b)* über einen zweiten Gasverteiler 1 cm unter der expandierten Höhe des Wirbelbettes. Im Fall a) wurde eine Gesamtausbeute an Trichlorsilan von 9,4 % (Bezogen auf die in den Reaktor eingebrachte Cl-Menge) bei einem Chlorwasserstoffumsatz von 95 % erhalten. Im Fall b) führt die Zugabe von Chlorwasserstoff im oberen Teil des Reaktionsraums dazu, dass sich die Gesamtausbeute an Trichlorsilan auf 11,4 % (Bezogen auf die in den Reaktor eingebrachte Cl-Menge) erhöht, während der Chlorwasserstoffumsatz nur leicht auf 80 % zurückgeht.

Die Gesamtausbeute an Trichlorsilan wird dabei durch die Formel

$$Y_{SiHCl_3} = \frac{3}{4} \cdot \frac{p_{SiHCl_3}}{\left( p_{SiCl_4} + \frac{3}{4} p_{SiHCl_3} + \frac{2}{4} p_{SiH_2Cl_2} + \frac{1}{4} p_{HCl} \right)}$$

definiert, wobei p der Partialdruck ist und sich alle Partialdrücke auf das Produktgas beziehen.

### Patentansprüche

1. Verfahren zur Herstellung von Trichlorsilan durch Umsetzung von Silicium mit Siliciumtetrachlorid und Wasserstoff unter Zugabe von Chlorwasserstoff, **dadurch gekennzeichnet, dass** die Verweilzeit des Chlorwasserstoffs im Reaktionsraum 10$^{-3}$ bis 50 % der Verweilzeit des Siliciumtetrachlorids beträgt.

2. Verfahren nach Anspruch 1, **dadurch gekennzeichnet, dass** die Verweilzeit des Chlorwasserstoffs im Reaktionsraum 10$^{-3}$ bis 20 % der Verweilzeit des Siliciumtetrachlorids beträgt.

3. Verfahren nach wenigstens einem der Ansprüche 1 bis 2, **dadurch gekennzeichnet, dass** das Verfahren bei einer Temperatur von 350 bis 800°C durchgeführt wird.

4. Verfahren nach wenigstens einem der Ansprüche 1 bis 3, **dadurch gekennzeichnet, dass** das Verfahren bei Drücken von 1 bis 150 bar durchgeführt wird.

5. Verfahren nach wenigstens einem der Ansprüche 1 bis 4, **dadurch gekennzeichnet, dass** die Umsetzung von Silicium in einem Reaktor erfolgt, in dem das Silicium in Form von Partikeln so vom zugeführten Gas durchströmt wird, dass die Partikel fluidisiert werden und sich ein Wirbelbett ausbildet.

6. Verfahren nach wenigstens einem der Ansprüche 1 bis 5, **dadurch gekennzeichnet, dass** die Verweilzeit des Chlorwasserstoffs dadurch eingestellt wird, dass Siliciumtetrachlorid und Wasserstoff über einen Gasverteiler von unten in den Reaktionsraum eingespeist werden, während die Einspeisung von Chlorwasserstoff über eine zweite Gaszufuhrvorrichtung erfolgt, die sich im oberen Teil des Reaktionsraumes oder des Reaktors befindet.

**7.** Verfahren nach wenigstens einem der Ansprüche 1 bis 5, **dadurch gekennzeichnet, dass** Silicium aus dem Reaktor ausgetragen wird und die Verweilzeit des Chlorwasserstoffs durch dessen Zugabe an einer Stelle, an der das aus dem Reaktor ausgetragene Material aus dem Gasstrom abgetrennt wird, eingestellt wird.

**8.** Verfahren nach wenigstens einem der Ansprüche 1 bis 5, **dadurch gekennzeichnet, dass** Silicium aus dem Reaktor ausgetragen und wieder in den Reaktor zurückgeführt wird und die Verweilzeit des Chlorwasserstoffs durch dessen Zugabe im Bereich der Rückführung von ausgetragenem Feststoff in den Reaktor eingestellt wird.

**9.** Verfahren nach wenigstens einem der Ansprüche 1 bis 8, **dadurch gekennzeichnet, dass** 0,05 - 20 Gew.-% Chlorwasserstoff, bezogen auf die Masse des zugeführten Siliciumtetrachlorids eingesetzt werden.

**10.** Verfahren nach einem der Ansprüche 1 bis 9, **dadurch gekennzeichnet, dass** das Produkt Trichlorsilan zu Silan und/oder Reinst-Silicium weiterverarbeitet wird.

## Claims

**1.** A method for producing trichlorosilane by reacting silicon with silicon tetrachloride and hydrogen while adding hydrogen chloride, **characterised in that** the residence time of the hydrogen chloride in the reaction chamber is $10^{-3}$ to 50 % of the residence time of the silicon tetrachloride.

**2.** A method according to Claim 1, **characterised in that** the residence time of the hydrogen chloride in the reaction chamber is $10^{-3}$ to 20 % of the residence time of silicon tetrachloride.

**3.** A method according to at least one of Claims 1 to 2, **characterised in that** the reaction is carried out at a temperature from 350 to 800°C.

**4.** A method according to at least one of Claims 1 to 3, **characterised in that** the reaction is carried out at pressures from 1 to 150 bar.

**5.** A method according to at least one of Claims 1 to 4, **characterised in that** the reaction is carried out in a reactor wherein the introduced gas streams in a way through the silicon particles introduced such that the particles are fluidized and a fluidized bed develops.

**6.** A method according to at least one of Claims 1 to 5, **characterised in that** the residence time of hydrogen chloride is adjusted **in that** silicon tetrachloride and hydrogen are introduced from below in the reaction chamber by means of a gas distributor, while hydrogen chloride is introduced by means of a second gas supply apparatus located in the upper part of the reaction chamber or the reactor.

**7.** A method according to at least one of Claims 1 to 5, **characterised in that** silicon is carried out from the reactor and that the residence time of hydrogen chloride is adjusted by adding such hydrogen chloride in a position where the material that was carried out of the fluidized bed is separated from the gas stream.

**8.** A method according to at least one of Claims 1 to 5, **characterised in that** silicon is carried out from the reactor and is returned back into the reactor again and that the residence time of hydrogen chloride is adjusted by adding such hydrogen chloride in such area where the solids that were carried out from the reactor are returned into the reactor again.

**9.** A method according to at least one of Claims 1 to 8, **characterised in that** 0.05 - 20 weight percent hydrogen chloride based on the amount of silicon tetrachloride added is employed.

**10.** A method according to one of Claims 1 to 9, **characterised in that** the product trichlorosilane is processed into silane and/or hyper-pure silicon.

**Revendications**

1. Procédé de préparation du trichlorosilane par réaction du silicium avec le tétrachlorure de silicium et l'hydrogène avec addition de chlorure d'hydrogène, **caractérisé en ce que** le temps de séjour du chlorure d'hydrogène dans l'espace de réaction est $10^{-3}$ à 50 % du temps de séjour du tétrachlorure de silicium.

2. Procédé selon la revendication 1 **caractérisé en ce que** le temps de séjour du chlorure d'hydrogène dans l'espace de réaction est $10^{-3}$ à 20 % du temps de séjour du tétrachlorure de silicium.

3. Procédé selon au moins l'une des revendications 1 à 2 **caractérisé en ce que** le procédé est mis en oeuvre à une température de 350 à 800°C.

4. Procédé selon au moins l'une des revendications 1 à 3 **caractérisé en ce que** le procédé est mis en oeuvre à des pressions de 1 à 150 bar.

5. Procédé selon au moins l'une des revendications 1 à 4 **caractérisé en ce que** la réaction du silicium a lieu dans un réacteur dans lequel le silicium sous forme de particules est traversé par le gaz introduit de telle manière que les particules sont fluidisées et qu'il se forme un lit fluidisé.

6. Procédé selon au moins l'une des revendications 1 à 5 **caractérisé en ce que** le temps de séjour du chlorure d'hydrogène est réglé par le fait que le tétrachlorure de silicium et l'hydrogène sont introduits par en bas dans l'espace de réaction par un distributeur de gaz tandis que l'introduction du chlorure d'hydrogène a lieu par le biais d'un second dispositif d'introduction de gaz qui se trouve dans la partie supérieure de l'espace de réaction ou du réacteur.

7. Procédé selon au moins l'une des revendications 1 à 5 **caractérisé en ce que** le silicium est extrait du réacteur et le temps de séjour du chlorure d'hydrogène est réglé par son addition en un endroit où la matière extraite du réacteur est séparée du courant gazeux.

8. Procédé selon au moins l'une des revendications 1 à 5 **caractérisé en ce que** le silicium est extrait du réacteur et réintroduit dans le réacteur et le temps de séjour du chlorure d'hydrogène est réglé par son addition dans le domaine de la réintroduction dans le réacteur du solide extrait.

9. Procédé selon au moins l'une des revendications 1 à 8 **caractérisé en ce que** 0,05 - 20 % en masse de chlorure d'hydrogène, par rapport à la masse du tétrachlorure de silicium introduit, sont utilisés.

10. Procédé selon l'une des revendications 1 à 9 **caractérisé en ce que** le produit trichlorosilane est transformé ultérieurement en silane et/ou en silicium extra-pur.